# EUROPÄISCHE PATENTSCHRIFT

(11) **EP 0 643 144 B1**
(45) Veröffentlichungstag und Bekanntmachung des Hinweises auf die Patenterteilung: **29.12.1997**
(21) Anmeldenummer: 94927429.4
(22) Anmeldetag: 28.07.1993
(51) Int. Cl.: C22C 16/00, C22F 1/18, G21C 3/07

(54) **MATERIAL AUF ZIRKONBASIS, DARAUS HERGESTELLTES TEIL FÜR DEN EINSATZ IN DER AKTIVEN ZONE EINES ATOMREAKTORS UND VERFAHREN ZUR HERSTELLUNG DIESES TEILES**
ZIRCONIUM-BASED MATERIAL, ARTICLE MADE OF THE SAID MATERIAL FOR USE IN THE ACTIVE ZONES OF ATOMIC REACTORS, AND A PROCESS FOR OBTAINING SUCH ARTICLES
MATERIAU A BASE DE ZIRCONIUM, ARTICLE CONSTITUE DUDIT MATERIAU DESTINE A ETRE UTILISE DANS LES ZONES ACTIVES DE REACTEURS ATOMIQUES ET PROCEDE DE FABRICATION DESDITS ARTICLES

(30) Priorität: 26.03.1993 RU 1150493; 23.06.1993 RU 2868193
(43) Veröffentlichungstag der Anmeldung: 15.03.1995
(73) Patentinhaber: VSESOJUZNY NAUCHNO-ISSLEDOVATELSKY INSTITUT NEORGA NICHESKIKH MATERIALOV IMENI AKADEMIKA A.A. BOCHVARA,, Moscow, 123060 (RU)
(72) Erfinder: NIKULINA, Antonina Vasilievna, Moscow, 125057 (RU); MARKELOV, Pavel Pavlovich, Moscow, 123098 (RU); MARKELOV, Vladimir Andreevich, Moscow, 123308 (RU); PEREGUD, Mikhail Mikhailovich, Moscow, 117312 (RU); IVANOV, Anatoly Nikolaevich, Moscow, 123182 (RU); SHEBALDOV, Pavel Vasilievich, Moscow, 125080 (RU); LOSITSKY, Anatoly Frantsevich, Glazov, 427600 (RU); DUBROVSKY, Valery Anatolievich, Glazov, 427600 (RU); BIBILASHVILI, Jury Konstantinovich, Moscow, 125252 (RU); KOTREKHOV, Vladimir Andreevich, Glazov, 427600 (RU); KUZMENKO, Nikolai Vasilievich, Glazov, 427600 (RU); GUSEV, Anatoly Jurievich, Moscow, 115533 (RU); NIKULIN, Sergei Anatolievich, Moscow, 115569 (RU); SHEVNIN, Jury Pavlovich, Glazov, 427600 (RU); SHAMARDIN, Valentin Kuzmich, ul. Teatralnaya,4b-4, Ulyanovskaya obl., 433510 (RU); NOVOSELOV, Andrei Evgenievich, ul. Lenina,34-26, Ulyanovskaya obl., 433510 (RU); SOLONIN, Mikhail Ivanovich, Moscow, 123458 (RU)
(74) Vertreter: von Füner, Alexander, Dr.
(86) Internationale Anmeldenummer: RU9300180
(87) Internationale Veröffentlichungsnummer: WO9423081

(56) Entgegenhaltungen:
- EP-A- 0 415 134
- EP-A- 0 468 093
- DE-A- 2 432 664
- DE-A- 2 607 146
- US-A- 5 019 333
- US-A- 5 254 308

## Beschreibung

### Technisches Gebiet

Die vorliegende Erfindung bezieht sich auf die Herstellung von Einzelteilen aus korrosionsbeständigen Legierungen, die als Konstruktionswerkstoffe der aktiven Zone von Kernreaktoren verwendet werden, insbesondere betrifft sie ein Material auf Basis von Zirkonium, ein in der aktiven Zone von Kernreaktoren einsetzbares Erzeugnis aus diesem Material und ein Verfahren zur Herstellung derartiger Erzeugnisse.

### Zugrundeliegender Stand der Technik

An die genannten Materialien und Erzeugnisse aus ihnen wird eine ganze Reihe von Forderungen gestellt in bezug auf die Festigkeitseigenschaften, die Korrosionsbeständigkeit in Wasser und im Medium eines Hochtemperatur-Wasserdampfes, in bezug auf die Beständigkeit gegen Wasserstoffaufnahme, den Widerstand gegen Strahlungswachstum und Kriechen. Das Material soll hohe technologische Charakteristiken besitzen, da es zur Herstellung z.B. von dünnwandigen Rohren für Hüllen von Brennstoffelementen, Distanzgittern und anderen Konstruktionselementen der aktiven Zone von Kernreaktoren bestimmt ist.

Im höchsten Grade eignen sich für diesen Zweck Materialien auf Zirkoniumbasis, die 0,5 bis 1,5 Masse-% Niob, 0,9 bis 1,5 Masse-% Zinn und 0,3 bis 0,6 Masse-% Eisen oder in Kombination mit diesem bis zu 0,2 Masse-% Chrom enthalten. Die genannten Materialien weisen im Vergleich mit den Legierungen, in denen der Gehalt an dritter Komponente 0,28 Masse-% nicht übersteigt, eine höhere Korrosionsfestigkeit einschliesslich des erhöhten Widerstandes gegen noduläre Korrosion und einen höheren Widerstand gegen Strahlungswachstum und Kriechen auf.

Es ist eine Legierung auf Basis von Zirkonium bekannt (SU, A1, 1751222), die Komponenten im folgenden Verhältnis in Masse-% enthält:

| | |
|---|---|
| Zinn | 0,9-1,2 |
| Eisen | 0,3-0,6 |
| Niob | 0,5-1,1 |
| Zitkonium - alles übrige. | |

Die genannte Legierung besitzt recht hohe Korrosions- und mechanische Eigenschaften: Zugfestigkeit bis zu 490 - 580 (20°C) und 275 - 365 (350°C) MPa, Fliessgrenze bis zu 345 - 390 (20°C) und 185-245 (350°C) MPa, Korrosionsbeständigkeit im Dampf-Wasser-Gemisch bei 300°C und einer Bestrahlung bis 3,7-10²⁴ (3400 h) und 1·10²⁵ (7840 h) m⁻² Fluenzen (nach Massezunahme) bis zu 30 - 40 bzw. 80 - 95 mg/dm², Kriechgeschwindigkeit bei der Temperatur 350°C und Belastung 100 MPa bis zu (1,3-3,6)·10⁻⁵%/h.

Jedoch ist für diese Legierung bezeichnend die Neigung zur Bildung in einem Block und in ihren frühen Verarbeitungsstufen einer streifigen Anordnung von groben Teilchen (bis 1,5 µm gross) einer mit Eisen angereicherten, genügend beständigen intermetallischen Verbindung (ZrFe₃), was bei der umformenden Bearbeitung der Legierung mit hohen Stauchgraden zur Entstehung von Mikrorissen an den Anhäufungsstellen solcher Teilchen führt. Zur Beseitigung von groben Teilchen in der Struktur der Legierung ist die Durchführung von Beta (β)-Bearbeitungen des Blocks mit langen Haltezeiten auf hohen Temperaturen erforderlich, was einen erhöhten Metallaufwand wegen der Vergrösserung der Dicke der zu entfernenden gasgesättigten Schicht hervorruft und zur Verteuerung von Erzeugnissen führt.

Ausserdem werden trotz der Anwendung von β-Bearbeitungen bei den Fertigerzeugnissen aus dieser Legierung in der Struktur erneut hinreichend grabe (bis zu 0,1 µm) Teilchen von eisenhaltigen intermetallischen Verbindungen, darunter ZrFe₃, gebildet, wodurch die Gesamtdichte der Teilchen in der Alpha (α)-Zirkoniummatrix merklich sinkt. Dies erklärt sich durch eine hohe Neigung dieser intermetallischen Verbindungen zur Koagulation bei Temperaturen von Rekristallisationsglühungen zwischen den Stufen der mehrfachen Kaltverformung, die bei der Herstellung von Erzeugnissen aus der genannten Legierung angewendet werden. Das Vorhandensein von groben Teilchen intermetallischer Verbindungen mit verminderter Verteilungsdichte in der Matrix führt zur Senkung der Korrosionsbeständigkeit und der Charakteristiken des Bruchwiderstandes des Erzeugnismaterials.

Bekannt sind eine Legierung auf Zirkoniumbasis für Erzeugnisse von Leichtwassereeaktoren und ein Verfahren zu ihrer Bearbietung zwecks Erreichung eines bestimmten Niveaus des Kriechens von Material (US, A, Nr. 5125985).

Die genannte Legierung enthält in Masse-%:
0,5 - 2,0 Niob;
0,7 - 1,5 Zinn;
0,07-0.28 zumindest eines Metalls, gewählt aus einer Gruppe von Elementen, die Eisen, Nickel, Chrom einschliesst; bis zu 220 mln⁻¹ Kohlenstoff;
alles übrige - Zirkonium.

Im besagten Verfahren wendet man das β-Glühen nach der Extrusion, eine Reihe von Zwischenverminderungen des Querschnitts des Erzeugnisses und von Zwischenrekristallisations -α-Glühungen an, worauf die End-Querschnittsverminderung und das Endglüben des Erzeugnisses zum Spannungsabbau folgt. Das Wesen des Verfahrens besteht darin, eine optimale Kombination des Grads der Verringerung des Querschnittsmasses des Erzeugnisses und der Temperatur der Zwischenglühung nach einer solchen Querschnittsverminderung in der Kaltbearbeitungsstufe aufzufinden. Im letzten Stadium kann nach der Kaltbearbeitung das Beta-Härten angewandt werden.

Das Verfahren gewährleistet die Herstellung von Erzeugnissen mit gleichbleibender Geschwindigkeit bei der Temperatur 385°C sowie die Herstellung von Erzeugnissen mit einer Verringerung der Querschnittsfläche bis 10 - 190%.

Jedoch besitzen die Erzeugnisse aus der genannten Legierung einen unzureichend breiten Komplex von Korrosionseigenschaften, darunter auch einen ungenügend hohen Widerstand gegen die noduläre Korrosion in siedendem Wasser. Dies erklärt sich hauptsächlich dadurch, dass wegen eines verhältnismässig niedrigen Gehalts an dritter Komponente, und das ist in der Regel Eisen, es nicht gelingt, eine bestimmte qualitative und quantitative Zusammensetzung der Teilchen der zweiten Phase und die erforderliche Dichte ihrer Verteilung zu erhalten, die in ihrer Gesamtheit ein hohes Niveau von Korrosions- und mechanischen Eigenschaften sicherstellen, weil unter den Teilchen der zweiten Phase die Teilchen ein beträchtliches Volumen ausmachen, die hauptsächlich an Niob reich sind, während die eisenhaltigen intermetallischen Verbindungen, welche die Korrosions- und mechanischen Eigenschaften des Erzeugnissen bestimmen, in einer geringen Anzahl und mit einem grossen Teilchenabstand (über 0,50 µm) gebildet werden.

Darüber hinaus ist es bei der Anwendung des in Rede stehenden Bearbeitungsverfahrens unmöglich, eine Kombination des hohen Kriechwiderstandes, der Rissbeständigkeit und des Korrosionswiderstandes im Erzeugnis zu erzielen, darunter für Legierungen mit einem höheren Eisengehalt - von 0,3 bis 0,6 Masse-%. Dies ist dadurch erklärlich, dass es nicht gelingt, eine hohe Homogenität der körnigen Struktur der Matrix der Legierung mit in ihr gleichmässig verteilten feindispersen Teilchen (unter 0,1 - 0,2 µm) der zweiten Phase zu erzielen. Bei der Bearbeitung ohne Beta-Härtung sind in der Stufe der Kaltverformung des Blocks in der Struktur der Legierung hauptsächlich Teilchen der zweiten Phase mit 0,1 - 0,4 µm Grösse anwesend, was keine ausreichend hohe Korrosionsbeständigkeit der Legierung gewährleistet. Ausserdem gelingt es bei einer solchen Bearbeitung nicht, das Vorhandensein von einzelnen groben, mit einer Grösse von bis 1,5 µm, Ausscheidungen der intermetallischen Verbindungen vom Typ ZrFe₃ zu vermeiden, die im Falle ihrer Anhäufungen die Zähigkeit und Rissbeständigkeit des Materials herabsetzen. Die Anwendung der Beta-Härtung in der Endstufe der Kaltbearbeitung gestattet es, die Bildung von groben intermetallischen Verbindungen in der Struktur der Legierung zu vermeiden, jedoch reicht die einmalige Verformung und das einmalige Glühen nach der Härtung nicht aus, um die geerbte Steifigkeit in der Anordnung der Ausscheidungen der zweiten Phase zu beseitigen und im ganzen eine homogene feinkörnige Struktur mit einem stabil hohen Niveau der Korrosionsbeständigkeit und des Bruchwiderstandes zu erhalten. Überdies besitzt das Material (besonders die Legierungen mit erhöhtem Eisengehalt) nach der Beta-Härtung in der Endstufe der Bearbeitung infolge Härtespannungen eine verminderte Reserve der technologischen Plastizität, was hohe Kaltverformungsgrade in der letzten Bearbeitungsstufe nicht anzuwenden erlaubt und die Anwendungsmöglichkeit dieses Verfahrens für Erzeugnisse mit grosser Querschnittsverminderung in der Endstufe der umformenden Bearbeitung einschränkt.

Es sind ein Material auf Basis von Zirkonium und ein Verfahren zur Herstellungs eines Erzeugnisses aus diesem Material bekannt (US, A, Nr. 4649023). Das Material enthält in Masse-%; 0,5-2,0 Niob; 0,9-1,5 Zinn, 0,09-0,11 dritte Komponente aus einer Gruppe, die Eisen, Chrom, Molybdän, Vanadin, Kupfer, Nickel und Wolfram einschliesst; alles übrige - Zirkonium.

Das Verfahren umfasst folgende Stufen:
- Herstellung eines Blocks und Druckumformung unter Erzeugung eines Rohlings;
- Beta-Bearbeitung (Härtung) des Rohlings;
- ursprüngliche mechanische Bearbeitung des Rohlings bei einer Temperatur unter 650°C;
- Beta-Glühen (mit schneller Abkühlung);
- mechanische Bearbeitung durch mehrstufige Kaltbearbeitung bei einer Temperatur unter 650°C;
- Glühen zwischen den Kaltbearbeitungsstufen bei einer Temperatur zwischen 500 und 650°C;
- Endglühen bei einer Temperatur unter 650°C.

Das beschriebene Verfahren gewährleistet eine gleichmässige Verteilung der Teilchen der zweiten Phase mit einer mittleren Grösse von unter 800 Å in der Mikrostruktur des Materials, macht dieses beständig gegen Korrosion und Wasserstoffaufnahme im Medium eines Hochtemperatur-Wasserdampfes von Kernreaktoren.

Wegen eines niedrigen Gehaltes des Materials an dritter Komponente ist jedoch die Dichte der Eisen enthaltenden Teilchen der zweiten Phase unzureichend, um ein höheres Niveau des Korrosionswiderstandes des Materials sicherzustellen.

Ausserdem kann das besagte Verfahren nur zur Herstellung von Erzeugnissen aus Zirkoniummaterialien angewandt werden, die die dritte Komponente in einer Menge von höchstens 0,25 Masse-% enthalten. Die Anwendung dieses Verfahrens für Erzeugnisse aus einem Material mit einem höheren Gehalt an dritter Komponente (von 0,3 bis 0,6 Masse-%) führt zu einer erhöhten Ausschussquote in bezug auf Mikrorisse nach dem ersten Kaltwalzen mit hinreichend hohen, in der Praxis anwendbaren Stauchgraden. Dies erklärt sich durch eine verminderte technologische Plastizität des Materials wegen eines hohen Niveaus der in ihm vorhandenen Rest-Härtespannungen als Ergebnis der Beta-Glühung und der nachfolgenden schnellen Abkühlung, die vor den Kaltwalzvorgängen angewendet werden.

Die auf die Vermeidung des Rissigwerdens des Materials abzielende Durchführung des ersten Kaltwalzens mit niedrigen Stauchgraden ruft die Notwendigkeit hervor, eine grosse Anzahl von Operationen der Kaltverformung mit Zwischenglühungen auszuführen, was das Verfahren wesentlich weniger wirtschaftlich macht. Dabei verschlechtern sich auch die Korrosions- und mechanischen Eigenschaften des Materials wegen der Ausbildung im Erzeugnismaterial einer weniger feinkörnigen und homogenen Struktur mit grösseren Auscheidungen der Teilchen der zweiten Phase mit einem Teilchenabstand in der Grössenordnung von 0,45 - 0,50 µm. Dies hängt damit zusammen, dass das Zwischenglühen in diesem Fall bei einer höheren Temperatur und während einer längeren Zeit durchgeführt wird, was letzten Endes eben zum Wachstum des Korns und der Teilchen der zweiten Phase führt.

### Offenbarung der Erfindung

Der vorliegenden Erfindung liegt die Aufgabe zugrunde, ein Material auf Basis von Zirkonium, ein Erzeugnis aus diesem Material, das in der aktiven Zone von Kernreaktoren eingesetzt wird, und ein Verfahren zur Herstellung dieser Erzeugnisse zu schaffen, welche durch Bildung einer bestimmten Mikrostruktur im Erzeugnis ein höheres Niveau der Korrosionsfestigkeit, des Bruchwiderstandes und der Beständigkeit dieser Erzeugnisse gegen Strahlungswachstum und Kriechen sicherstellen würden.

Dies ist möglich erstens durch Beseitigung im Material mit erhöhtem Eisengehalt der Neigung zur Bildung grober Teilchen von intermetallischen Verbindungen, zweitens durch Erhöhung der Reserve der technologischen Plastizität von Rohlingen im Stadium der Kaltwalzverarbeitung, was es erlaubt, hinreichend hohe Verformungsgrade in den ersten Kaltbearbeitungsstufen anzuwenden. Das letztere verbessert wiederum die Homogenität dei Struktur des Materials und trägt zur Formierung einer bestimmten Zusammensetzung; eines Dispersionsgrades und einer gleichmässigen Verteilung des Teilchen der zweiten Phase in der Zirkoniummatrix bei, wodurch höhere Betriebscharakteristiken der Erzeugnisse, darunter die Korrosionsbeständigkeit im Medium eines Hochtemperatur-Wasserdampfes, der Bruchwiderstand und die Beständigkeit gegen Strahlungswachstum und Kriechen, sichergestellt werden.

Die gestellte Aufgabe ist durch Schaffung eines Materials auf Zirkoniumbasis gelöst, das Niob, Zinn, Eisen, Chrom, Kohlenstoff, Sauerstoff una Silizium enthält und eine Mikrostruktur aufweist, die Teilchen von zinn- und eisenhaltigen intermetallischen Verbindungen einschliesst, welches Material erfindungsgemäss Komponenten im folgenden Verhältnis in Masse-% enthält:

| | |
|---|---|
| Niob | 0,5-1,5 |
| Zinn | 0,9-1,5 |
| Eisen | 0,3-0,6 |
| Chrom | 0,005-0,2 |
| Kohlenstoff | 0,005-0,04 |
| Sauerstoff | 0,05-0,15 |
| Silizium | 0,005-0,15 |
| Zirkonium | alles übrige, |

wobei die Mikrostruktur Teilchen der eisenhaltigen intermetallischen Verbindungen vom Typ Zr(Nb,Fe)₂, Zr(Nb,Cr,Fe), (Zr,Nb)₃Fe einschliesst, deren Summe gleich oder grösser ist als 60 Vol.% des Gesamtgehaltes an eisenhaltigen intermetallischen Verbindungen bei einem Abstand zwischen den Teilchen von 0,20 bis 0,40 µm.

Das Vorhandensein der genannten Komponenten in der genannten Menge gewährleistet während der Herstellung von Erzeugnissen aus dem besagten Material, dass in der α-Zirkoniummatrix Teilchen der zweiten Phase vom Typ Zr(Nb,Fe)₂, Zr(Fe,Cr,Nb), (Zr,Nb)₃Fe gebildet werden, welche die hohen Korrosions- und mechanischen Eigenschaften des Erzeugnisses bestimmen. Die Menge dieser Teilchen im Gesamtvolumen der eisenhaltigen Ausscheidungen der zweiten Phase beträgt dabei 60 Vol.% und darüber, während der Abstand zwischen diesen Teilchen von 0,20 bis 0,40 µm ausmacht.

Der Zusatz von Chrom zum Material mit einem Eisengehalt von 0,3 bis 0,6 Masse-% trägt zur Zerkleinerung der Teilchen der intermetallischen Verbindungen in der Struktur des Blocks und in den frühen Stadien seiner Verarbeitung dadurch bei, dass ein beträchtlicher Teil des Eisens zu intermetallischen Verbindungen gebunden wird, die Zirkonium, Eisen und Chrom enthalten, wobei die Grösse der Teilchen bedeutend kleiner ist als die der Teilchen vom Typ ZrFe₃, welche sich im Material in Abwesenheit von Chrom bilden. Als Ergebnis davon sind keine langen Haltezeiten auf hoher Temperatur während der β-Bearbeitung erforderlich. Ein erhöhter Eisengehalt des Materials gewährleistet im Erzeugnis die erforderliche Zusammensetzung und Menge der eisenhaltigen intermetallischen Verbindungen, solcher wie Zr(Nb,Fe)₂, Zr(Nb,Cr,Fe), (Zr,Nb)₃Fe, welche die hohen Korrosions- und mechanischen Eigenschaften des Erzeugnisses bestimmen. Silizium und Kohlenstoff verfeinern zusätzlich und erhöhen die Homogenität der Struktur des Materials. Sauerstoff verfeinert ebenfalls die Struktur und wird noch als Mischkristall-Verfestigungsmittel ausgenutzt.

Alle oben aufgezählten Faktoren tragen bei der erfindungsgemässen Herstellung von in der aktiven Zone von Kernreaktoren einsetzbaren Erzeugnissen aus dem erfindungsgemäss vorgeschlagenen Material zur Formierung im Enderzeugnis einer homogenen feinkörnigen α-Zirkoniummatrix mit in ihr gleichmässig verteilten Teilchen von eisenhaltigen intermetallischen Verbindungen bei, deren Hauptmasse eine Grösse unter 0,1 µm bei einem Teilchenabstand von 0,20 µm bis 0,40 µm hat, wobei nicht weniger als 60 Vol. % Teilchen in ihrer Gesamtheit intermetallische Verbindungen vom Typ Zr(Nb,Fe)₂, Zr(Nb,Cr,Fe), (Zr,Nb)₃Fe ausmachen.

Das Vorhandensein einer solchen Mikrostruktur in Erzeugnissen aus dieser Legierung gewährleistet denselben eine hohe Korrosionsbeständigkeit einschliesslich eines erhöhten Widerstandes gegen die noduläre Korrosion, eine hohe Plastizität und einen hohen Bruchwiderstand, eine erhöhte Beständigkeit gegen Strahlungswachstum und Kriechen.

Die gestellte Aufgabe ist auch gelöst durch Schaffung eines Verfahrens zur Herstellung von in der aktiven Zone von Kernreaktoren einsetzbaren Erzeugnissen aus einem Material auf Zirkoniumbasis, das Niob, Zinn, Eisen, Chrom, Kohlenstoff, Sauerstoff, Silizium enthält, welches Verfahren die Herstellung eines Blocks die β-Vorbearbeitung des Blocks, die Erzeugung eines Rohlings durch Heissformung des Blocks bei der Existenztemperatur von α-Zirkonium, die Kaltformung des Rohlings mit Zwischenglühungen bei der Existenztemperatur von α-Zirkonium und die Fertigbearbeitung des Rohlings bis zum fertigen Erzeugnis einschliesst und bei welchem man erfindungsgemäss ein Material verwendet, das Komponenten im folgenden Verhältnis in Masse-% enthält:

| | |
|---|---|
| Niob | 0,5-1,5 |
| Zinn | 0,9-1,5 |
| Eisen | 0,3-0,6 |
| Chrom | 0,005-0,2 |
| Kohlenstoff | 0,005-0,04 |
| Sauerstoff | 0,05-0,15 |
| Silizium | 0,005-0,15 |
| Zirkonium | alles übrige, |

wobei man nach der Heissformung des Blocks bei der Existenztemperatur von α-Zirkonium den Rohling bei einer Temperatur von 380° bis 650°C glüht.

Die Anwendung des erfindungsgemässen Verfahrens gestattet es, die Reserve der technologischen Plastizität des Materials durch beim genannten α-Glühen erfolgende Ausbildung einer stärker ausgeprägten Gleichgewichtesstruktur zur erhöhen, die auch aus der Sicht des Rekristallisationsgrades der Struktur der Matrix mit einer niedrigeren Versetzungsdichte homogener ist. Gleichzeitig mit dem Prozess der Rektristallisation der α-Zirkoniummatrix beginnt die Bildung der Teilchen der zweiten Phase vom Typ Zr(Nb,Fe)₂, Zr(Nb,Cr,Fe), (Zr,Nb)₃Fe. Dies bietet die Möglichkeit, die Kaltformung des Rohlings in den ersten Stufen mit erhöhten Verformungsgraden durchzuführen. Ein höherer Verformungsgrad des Metalls in der ersten Kaltbearbeitungsstufe begünstigt eine Senkung der Temperatur des Reskristallisationsbeginns der körnigen Struktur bei der nachfolgenden Zwischenglühung dank einer Vergrösserung der bei der Verformung gespeicherten Energie der Aktivierung dieses Prozesses. Eine solche Situation erlaubt es, die Zwischenglühung zwischen den Kaltbearbeitungsstufen bei einer niedrigeren Temperatur durchzuführen, was das Wachstum der Teilchen der zweiten Phase eines anderen Typs (z.B. ZrFe₃) während dieser Glühung verlangsamt. Dadurch wird auch die Bildung der Teilchen der zweiten Phase vom Typ Zr(NbFe)₂, Zr(Nb, Cr, Fe), (ZnNb)̵₃Fe in einer Menge von 60 Vol.% und darüber von der Gesamtmenge der eisenhaltigen intermetallischen Verbindungen sowie eine feinere Verteilung der Teilchen der zweiten Phase im Volumen des Erzeugnisses begünstigt. Dies wiederum wirkt sich auf die Betriebscharakteristiken des Erzeugnisses güngstig aus, wie sie die Korrosionsbeständigkeit, Plastizität und Bruchwiderstand sind.

Überdies erhöht die Steigerung des Verformungsgrades des Materials in den ersten Stufen der Kaltformung des Rohlings die Technologiegerechtheit des Verfahrens und macht den Prozess der Herstellung von Erzeugnissen wirtschaftlicher, was ihn auf eine grössere Nomenklatur von Zirkoniummaterialien und Erzeugnissen aus ihnen auszudehnen erlaubt.

Es ist wünschenswert, nach der β-Bearbeitung vor der Heissformung des Blocks den Rohling bei einer Temperatur von 380 bis 650°C zu glühen. Ein solches Glühen baut Härtespannungen ab, vermindert und gleicht die Versetzungsdichte über den Rohlingsquerschnitt aus und bringt das Material in einen stärker ausgeprägten Gleichgewichtszustand, was die Reserve seiner Plastizität und Zähigkeit wesentlich erhöht. Im Ergebnis dieser Glühung lässt sich der Prozess der Heissformung mit einer grösseren Streckung und bei einer niedrigeren Temperatur durchführen. Besonders wichtig ist die Anwendung dieser Glühung für Materialien mit einem Eisengehalt von 0,3-0,6 Masse-%, weil mit der Erhöhung des Eisengehaltes je 0,1 Masse-% desselben die Übergangstemperatur der (α plus β)-Struktur in die α-Struktur etwa um 15°C sinkt. Daher gibt das erfindungsgemässe Glühen nach der β-Bearbeitung die Möglichkeit, die Heissformung mit hohen Streckgraden bei einer niedrigeren Temperatur durchzuführen, was das erfindungsgemässe Verfahren universaler macht.

Es ist zweckmässig, vor dem α-Glühen nach der Heissformung den Rohling der β-Härtung ab der Temperatur von 900 bis 1000°C zu unterwerfen und das genannte α-Glühen bei einer Temperatur von 380 bis 520°C vorzunehmen.

Bei solch einer Kombination der β-Härtung und der α-Glühung nach der Heissformung wird eine hohe Reserve der technologischen Plastizität im Material sichergestellt. Dabei kann man die Kaltformung des Rohlings in der Anfangsstufe mit hohen Stauchgraden durchführen. Die Anwendung der genannten β-Härtung mit dem α-Glühen vor der Kaltbearbeitung des Rohlings führt zu einer feineren Verteilung der Teilchen der zweiten Phase in der Matrix des Erzeugnisses. Dies rührt davon her, dass die β-Härtung intermetallische Verbindungen und andere Teilchen der zweiten Phase, die sich in den frühen technologischen Arbeitsstufen gebildet haben, vollständig auflöst. Das nachfolgende α-Glühen bei einer Temperatur von 380 - 520°C baut die Härtespannungen ab, mindert die Versetzungsdichte in der Matrix im Ergebnis des Polygonisierungsprozesses herab, führt jedoch nicht zur abermaligen Bildung von intermetallischen Verbindungen und anderen Teilchen der zweiten Phase aus β-Zirkonium-Zwischenschichten, die zwischen den Lamellen des gehärteten Martensitgefüges liegen. Die Zwischenschichten behalten ihre Form bei und bleiben ausreichend plastisch, indem sie lediglich ihre innere Mikrostruktur verändern. Ein derartiges gehärtetes und geglühtes Lamellargefüge besitzt im Vergleich mit dem Gefüge nach der β-Härtung ohne α-Glühung eine wesentlich höhere Zähigkeitsreserve, was die Kaltformung des Rohlings mit höheren Stauchgraden ermöglicht. Als Ergebnis der Kaltformung werden die β-Zirkonium-Zwischenschichten des gehärteten und geglühten Gefüges des Materials in Walzrichtung gestreckt, indem sie dünner werden und in den gespanntesten Abschnitten teilweise fragmentieren. Das nachfolgende Glühen führt dazu, dass aus diesen dünnen Zwischenschichten feinere Teilchen der zweiten Phase hauptsächlich vom Typ Zr(Nb,Fe)₂, Zr(Nb,Cr,Fe), (Zr,Nb)₃Fe und in einer grossen Menge gebildet werden. Je höher der Kaltverformungsgrad ist, desto dünnere Zwischenschichten kann man erhalten und das Glühen bei einer niedrigeren Temperatur durchführen, ohne das Wachstum der Teilchen zuzulassen. Im Enderzeugnis bilden sich also feindisperse Teilchen des genannten Typs in einer Menge von 60 Vol.% und mehr vom Gesamtvolumen der eisenhaltigen Teilchen der zweiten Phase, und sie sind dann in der Matrix des Erzeugnisses mit einer hohen Dichte gleichmässig verteilt. Eine solche Mikrostruktur weist eine höhere Plastizität, einen höheren Bruchwiderstand und eine höhere Korrosionsbeständigkeit auf.

Es ist wünschenswert, die β-Härtung mit einer Geschwindigkeit von 60°C/s bis 1000°C/s durchzuführen. In diesem Fall bildet sich eine feinere disperse Struktur mit schmalen Lamellen der α-Zirkonium-Ungleichgewichtsphase aus, zwischen denen sich dünnere Zwischenschichten der β-Zirkoniumphase befinden, aus welchen bei nachfolgenden Kaltbearbeitungsgängen mit Zwischenglühungen intermetallische Verbindungen und andere Teilchen der zweiten Phase gebildet werden. Je kleiner die Lamellen und je dünner die Zwischenschichten zwischen ihnen sind, um so feinere Teilchen der zweiten Phase werden gebildet, umso kleiner ist der Teilchenabstand und demgemäss grösser die Dichte dieser Teilchen. Eine dispersere und gleichmässigere Verteilung der Teilchen der zweiten Phase in der Matrix des Erzeugnisses führt zu einer höheren Plastizität, einem höheren Bruchwiderstand und einer höheren Korrosionsbeständigkeit.

### Beste Ausführungsform der Erfindung

Das Verfahren zur Herstellung von in der aktiven Zone von Kernreaktoren einsetzbaren Erzeugnissen (beispielsweise von Rohren) aus einem Material auf Zirkoniumbasis wird folgenderweise durchgeführt.

Einen Block aus einem Material, das in Masse-% 0,5-1,5 Niob, 0,9-1,5 Zinn, 0,3-0,6 Eisen, 0,005-0,2 Chrom, 0,005-0,04 Kohlenstoff, 0,05-0,15 Sauerstoff, 0,005-0,15 Silizium, alles übrige - Zirkonium enthält, stellt man beispielsweise durch Vakuum-Lichtbogen-Umschmelzen her.

Das Vorhandensein der genannten Komponenten bei deren angegebenem Verhältnis gewährleistet für die Erzeugnisse ein hohes Niveau der Korrosionsbeständigkeit, des Bruchwiderstandes und der Beständigkeit gegen Strahlungawachstum und Kriechen. Als Basis für das Material wird Zirkonium verwendet, das einen niedrigen Neutroneneinfangquerschnitt besitzt und in der Atomenergetik weitestgehend eingesetzt wird.

Zinn erhöht die Korrosionsbeständigkeit des Zirkoniums und sichert diesem ein erforderliches Niveau der Festigkeit, des Kriechwiderstandes und anderer Betriebscharakteristiken.

Der erhöhte Eisengehalt gewährleistet im Erzeugnis die erforderliche Zusammensetzung und Menge eisenhaltiger intermetallischer Verbindungen wie Zr(Nb,Fe)₂, Zr(Fe,Cr,Nb), (Zr,Nb)₃Fe, die hohe Korrosions- und mechanische Eigenschaften des Erzeugnisses bestimmen.

Zusätze von Chrom zum Material mit einem erhöhten Eisengehalt tragen zur Zerkleinerung der Teilchen intermetallischer Verbindungen in der Struktur des Blocks und in den frühen Verarbeitungsstufen desselben bei. Als Ergebnis davon machen sich keine langen Haltezeiten auf hoher Temperatur bei der β-Behandlung erforderlich.

Silizium und Kohlenstoff verfeinern die Struktur des Materials und erhöhen ihre Homogenität.

Sauerstoff verfeinert die Struktur des Materials und wird als Mischkristall-Verfestigungsmittel benutzt.

Niob erhöht die Festigkeitseigenschaften des Zirkoniums und verbessert, indem es mit diesem und mit Eisen feindisperse Teilchen der zweiten Phase in der Zirkoniummatrix bildet, die Korrosionsbeständigkeit derselben.

Bei einem Gehalt des Materials an Niob unter 0,5 Masse-%, Eisen unter 0,3 Masse-% und Chrom unter 0,005 Masse-% wird in der α-Zirkoniummatrix des Enderzeugnisses der Anteil der intermetallischen Verbindungen vom Typ Zr(Nb,Fe)₂, Zr(Nb,Cr,Fe), (Zr,Nb)₃Fe in ihrer Gesamtheit wesentlich kleiner als 60 Vol.% des Gesamtvolumens der eisenhaltigen Teilchen der zweiten Phase sein, wodurch die Korrosionsbeständigkeit des Materials merklich sinkt. Bei einem Niobgehalt des Materials über 1,5 Masse-% bildet sich in ihm eine beträchtliche Menge von groben Teilchen der β-Niobphase, was den Korrosionswiderstand des Materials herabsetzt.

Der Gehalt des Materials an Eisen über 0,6 Masse-% führt zu Ansammlungen grober Teilchen einer intermetallischen Verbindung vom Typ ZrFe₃ und zur überschüssigen Koagulation anderer eisenhaltiger Teilchen der zweiten Phase mit einem Teilchenabstand von unter 0,20 µm. Infolgedessen wird das Material eine verminderte Technologiegerechtheit während der umformenden Bearbeitung und einen niedrigeren Bruchwiderstand im Fertigerzeugnis aufweisen.

Bei einem Chromgehalt über 0,2 Masse-% können sich im Material intermetallische Binärverbindungen von Zirkonium mit Chrom bilden, welche die Technoligiegerechtheit und den Bruchwiderstand des Materials verschlechtern.

Ein niedriger Zinngehalt (unter 0,9 Masse-%) setzt die kurzzeitige Festigkeit und die Zeitstandfestigkeit des Materials herab. Ausserdem unterdrückt eine solche Zinnmenge den schädlichen Einfluss der möglichen Beimengung von Stickstoff auf den Korrosionswiderstand des Materials in geringerem Grad. Wenn im Material mehr Zinn als 1,5 Masse-% enthalten ist, so sinkt die Technologiegerechtheit des Materials bei der Warm- und besonders Kaltumformung zusehens.

Ein geringer Sauerstoffgehalt (unter 0,05 Masse-%) ergibt praktisch keine Mischkristallverfestigung der α-Zirkoniummatrix, während ein Sauerstoffgehalt über 0,15 Masse-% die Technologiegerechtheit des Materials herabsetzt.

Ein Siliziumgehalt unter 0,005 Masse-% ist unzureichend für die Dispergierung und Erhöhung der Homogenität des Gussgefüges des Materials, weil in diesem Fall vorwiegend ein groblamellares Gefüge ausgebildet wird, was sich auf die Korrosions- und mechanischen Eigenschaften des Fertigerzeugnisses negativ auswirkt. Bei einem Siliziumgehalt über 0,15 Messe-% bilden sich im Material intermetallische Verbindungen mit Silizium, welche die Technologiegerechtheit des Materials und die Charakteristiken der Rissbeständigkeit und des Korrssionswiderstandes des Erzeugnisses verschlechtern.

Ein niedriger Kohlenstoffgehalt (unter 0,005 Masse-%) senkt die Korrosionsbeständigkeit des Materials, und bei einem Kohlenstoffgehalt über 0,04 Masse-% bildet sich ein überschüssiges Zirkoniumkarbidüberschuss, der ebenso wie die intermetallischen Verbindungen des Siliziums die Technologiegerechtheit und den Bruchwiderstand des Materials herabsetzt.

Nach dem Erschmelzen unterwirft man den Block einer mechanischen β-Bearbeitung z.B. durch Druckumformung bei einer Temperatur von 1070 bis 900°C mit einer Verkleinerung des Durchmessers etwa um das Fünffache. Hiernach erwärmt man den durch Druckumformung bearbeiteten Block auf eine Temperatur von etwa 1050°C und härtet ihn dann in Wasser. Nach der Entfernung der gasgesättigten Oberflächenschicht glüht man den gehärteten Rohling bei einer Temperatur von 380°C bis 650°C. Im Ergebnis der Glühung vergrössert sich um das Doppelte die Kerbschlagzähigkeit des gehärteten Rohlings dank dem Abbau von Härtespannungen, der Senkung und dem Ausgleich der Versetzungsdichte über den Rohlingsquerschnitt und einer teilweisen Transformation des lamellaren Gefüges unter Bildung von Abschnitten länglicher polygonisierter Körner der α-Zirkoniumphase. Gleichzeitig mit der Gefügeänderung der Matrix erscheinen Streifen der Teilchen intermetallischer Verbindungen, darunter vom Typ Zr(Nb,Fe)₂, Zr(Fe,Cr,Nb), (ZrNb)₃Fe, die sich aus den Zwischenschichten der β-Rest-Zirkoniumphase ausgebildet haben.

Das Glühen unterhalb der Temperatur 380°C ist unzureichend für wesentliche Strukturänderungen in der Legierung, die zur erforderlichen Erhöhung der Reserve der technologischen Plastizität führen. Das Glühen oberhalb 650°C für Legierungen mit einem erhöhten Gehalt an dritter Komponente, beispielsweise Eisen, führt zur zusätzlichen Bildung der β-Rest-Zirkoniumphase infolge des Gelangens in das Gebiet der α plus β-Struktur, wodurch grobe Teilchen intermetallischer Verbindungen gebildet werden, welche die Plastizität, den Bruchwiderstand und die Korrosionsbeständigkeit des Materials des Erzeugnisses verschlechtern.

Danach unterwirft, man den geglühten Rohling einer Heissformung (z.B. der Pressung) bei der Existenztemperatur von α-Zirkonium, beispielsweise bei 620°C unter Streckung ( µ ) etwa um das 5- bis 12 fache und Erzeugung eines Rohrrohlings.

Daraufhin unterzient man den gepressten Rohling der β-Härtung ab einer Temperatur von 900°C bis 1100°C mit einer Abkühlungsgeschwindigkeit von 60°C/s bis 1000°C/s. Im Ergebnis der β-Härtung bildet sich ein Martensitgefüge mit den Lamellen der α-Ungleichgewichts-Zirkoniumphase mit einer Breite von 0,4 bis 1,5 µm und den schmalen Zwischenschichten der β-Rest-Zirkoniumphase mit einem Quermass bis zu 0,1 µm, während die Teilchen von intermetallischen Verbindungen, die sich früher gebildet haben, beim Erwärmen und Halten vor der Härtung aufgelöst werden. Ein solches lamellares Gefüge nach der β-Härtung kennzeichnet sich durch Werte der Kerbschlagzähigkeit im Intervall von 80 bis 120 kJ/m².

Die Härtung ab einer Temperatur unterhalb 900°C führt nicht zur Bildung eines homogenen feinlamellaren Gefüges, weil in diesem Fall die Legierung beim Erwärmen vor der Härtung eine α plus β-Struktur aufweisen wird. Das Erwärmen vor der Härtung auf eine Temperatur oberhalb 1100°C führt zu einem übermässigen Wachstum der Körner der β-Zirkoniumphase, was die Technologiegerechtheit der Legierung nach der Härtung und dem nachfolgenden Glühen zusehens verschlechtert. Eine stärkere Hochtemperaturerwärmung erfordert überdies einen zusätzlichen Elektroenergieaufwand, was die Wirtschaftlichkeit des Bearbeitungsverfahrens herabmindert.

Die Härtung mit einer Geschwindigkeit unter 60°C/s führt zu einem weniger feinlamellaren Gefüge der α-Nichtgleichgewichts-Zirkoniumphase mit gröberen Zwischenschichten der β-Rest-Zirkoniumphase. Dabei kommen einzelne Zwischenschichten während der Kühlung noch dazu, unter Bildung von Streifen intermetallischer Verbindungen zu fragmentieren, welche bei nachfolgenden Glühungen vergrössert werden und die Eigenschaften der Legierung verschlechtern. Die Höchstgeschwindigkeiten der Härtung über 1000°C führen nicht zur zusätzlichen Gefügefeinerung, weshalb vom Standpunkt der Wirtschaftlichkeit des Verfahrens aus die Kühlung mit solchen Geschwindigkeiten unzweckmässig und schwer durchführbar ist.

Danach führt man das Glühen bei einer Temperatur von 380°C bis 520°C durch, das den Wert der Kerbschlagzähigkeit des gehärteten Materials bis auf 200 - 250 kJ/m² erhöht, die Festigkeitseigenschaften wesentlich herabmindert und die Plastizität des Materials steigert. Nach einer solchen Glühung bildet sich in manchen Kristallen (Lamellen) der α-Ungleichgewichts-Zirkoniumphase eine polygonale Substruktur heraus. Es werden längliche Ausgangslamellen dieser α-Zirkoniumphase und Abschnitte mit einer verwaschenen feinkristallinen Struktur beobachtet. Die Zwischenschichten der β-Rest-Zirkoniumphase zwischen den Lamellen werden weniger scharf (gleichsam verwaschen) und an einigen Stellen unterbrochen. Intermetallische Verbindungen werden bei diesem Glühen nicht gebildet.

Das Glühen unterhalb 380°C führt zu keiner merklichen Erhöhung der Reserve der technologischen Plastizität der gehärteten Legierung, und beim Glühen oberhalb 520°C beginnt eine Fragmentierung der Zwischenschichten der β-Zirkoniumphase unter Bildung an ihrer Stelle von langgestreckten Streifen intermetallischer Verbindungen, was unter den Bedingungen der Kaltverformung mit hohen Stauchgraden zur Bildung von Mikrorissen führt.

Nach einer solchen Glühung unterwirft man dann den Rohling einer Kaltumformung unter Streckung (µ) etwa um das 1,5- bis 2,5- fache und Verformung (ε) 30 bis 60%. Um späterhin eine fein dispersere Struktur zu erzielen, wird die genannte Kaltverformung vorzugsweise mit maximalen Stauchgraden durchgeführt.

Nach der einmaligen Kaltverformung unterzieht man den Rohling einer α-Rekristallisations-Zwischenglühung (in der Regel bei einer Temperatur von 540 bis 640°C). Bei dieser α-Glühung gehen in der verformten Matrix Prozesse der Rektristallisation der körnigen Struktur und der Bildung von Teilchen intermetallischer Verbindungen und anderer Ausscheidungen der zweiten Phase aus den Zwischenschichten der β-Zirkoniumphase vonstatten. Je grösser der vorläufige Verformungsgrad war, umso intensiver laufen diese beiden Prozesse auch bei einer niedrigeren Temperatur der α-Glühung ab. Als Ergebnis bildet sich eine feinkörnige α-Zirkoniumatrix mit feinen Teilchen der zweiten Phase heraus, darunter mit den intermetallischen Verbindungen vom Typ Zr(Nb,Fe)₂, Zr(Nb,Cr,Fe), (ZrNb)₃Fe, die hauptsächlich streifenweise an den Stellen der Ausgangs-Zwischenschichten der β-Zirkoniumphase angeordnet sind.

Die Vorgänge der Kaltverformung und der α-Glühung wiederholt man noch in der Regel drei- bis viermal in Abhängigkeit von der Nomenklatur des Erzeugnisses. Dank der Aufeinanderfolge der Prozesse der Verformung und Rektristallisation wird die α-Zirkoniummatrix des Materials feinkörniger, während die Streifigkeit in der Anordnung der Teilchen der zweiten Phase beseitigt wird.

Somit wird im Enderzeugnis eine vollständig rekristallisierte Struktur der α-Zirkoniummatrix mit einer Korngrösse hauptsächlich von 3 bis 5 µm und mit in dieser Matrix gleichmässig verteilten Teilchen eisenhaltiger intermetallischer Verbindungen hauptsächlich mit unter 0,1 µm Grösse bei einem Teilchenabstand von 0,20 - 0,40 µm und einer Dichte von 15 bis 25 µm⁻² herausgebildet, wobei über 60 Vol.% aus dem Gesamtvolumen der genannten Teilchen intermetallische Verbindungen vom Typ Zr(Nb,Fe)₂, Zr(Nb,Cr,Fe), (Zr,Nb)₃Fe ausmachen.

Eine solche homogene und feindisperse Struktur bestimmt ein hohes Niveau der Plastizität, des Bruchwiderstandes und der Korrosionsbeständigkeit des Materials eines in der aktiven Zone eines Kernreaktors einsetzbaren Erzeugnisses.

Wenn der Anteil der intermetallischen Verbindungen Zr(Nb,Fe)₂, Zr(Nb,Cr,Fe), (Zr,Nb)₃Fe weniger als 60 Vol% im Gesamtvolumen der Teilchen der zweiten Phase betragen wird, so wird in der Struktur des Materials eine beträchtliche Menge von Teilchen unerwünschter Phasen wie z.B. ZrFe₃ oder β-Niobphase vorhanden sein, die grössere Abmessungen haben. Infolgedessen werden die eisenhaltigen Teilchen der zweiten Phase im ganzen in der α-Zirkoniummatrix mit einem Teilchenabstand über 0,40 µm verteilt sein und aus diesem Grunde wird die Korrosionsbeständigkeit des Materials absinken.

Die Verteilung eisenhaltiger Teilchen mit einem Teilchenabstand über 0,40 µm wird beim Legieren des Materials mit Eisen unter 0,3 Masse-% beobachtet.

Für den Fall des Legierens von Zirkonium mit Niob, Eisen und Chrom über den oberen Grenzwert des Gehaltes des erfindungsgemässen Materials an diesen Komponenten hinaus kann der Teilchenabstand im Material eines nach dem erfindungsgemässen Verfahren hergestellten Erzeugnisses unter 0,20 µm sein, und Erzeugnisse mit solch einer Struktur weisen erniedrigte Charakteristiken der Plastizität, des Bruchwiderstandes und des Kriechens auf.

Zum besseren Verständnis der Erfindung werden nachstehend kontrete Ausführungsbeispiele derselben angeführt.

### Beispiel 1

Aus einem Material, das in Masse-% 1,5 Niob, 0,9 Zinn, 0,5 Eisen, 0,005 Chrom, 0,007 Kohlenstoff, 0,06 Sauerstoff, 0,009 Silizium und alles übrige Zirkonium enthielt, stellte man einen Block nach dem Vakuumlichtbogenschmelzverfahren her. Den Block unterzog man dem Schmieden bei einer Temperatur von 1070°C bis 900°C mit der Verringerung des Durchmessers um das Fünffache. Danach erwärmte man den geschmiedeten Rohling auf die Temperatur 1050°C und härtete ihn in Wasser. Nach Entfernen der gasgesättigten Oberflächenschicht teilte man den gehärteten Rohling in masshaltige Längen, bohrte man Löcher und glühte den Rohling bei der Temperatur 620°C. Darauf unterwarf man die masshaltigen Rohlinge mit Bohrung dem Pressen bei der Temperatur 620°C unter Streckung um das Zehnfache und Erzeugung eines Rohrrohlings mit 5,5 mm Wanddicke und 33 mm Aussendurchmesser. Des weiteren härtete man den gepressten Rohrrohling ab der Temperatur 950°C mit einer Geschwindigkeit von etwa 100°C/s und unterzog ihn dann dem Glühen bei der Temperatur 425°C. Die geglünten Rohlinge unterwarf man der Kaltbearbeitung nach dem Verformungsschema mit fünf Walzvorgängen mit einer Gesamtformänderung (in bezug auf Wand und Durchmesser) im ersten Walzvorgang und den nachfolgenden Walzvorgängen von etwa 50% und mit Zwischenglühungen bei der Temperatur 620°C. Die Endglühung nach dem Kaltwalzen führte man bei der Temperatur 580°C durch. Nach der Durchführung der Fertigbearbeitungsoperation erhielt man Fertigrohre mit 9,15 mm Durchmesser und 0,65 mm Wanddicke.

### Beispiel 2

Das Verfahren führte man ähnlich dem Beispiel 1 durch. Der Unterschied bestand darin, dass das Material in Masse-% 0,8 Niob, 1,0 Zinn, 0,6 Eisen und 0,01 Chrom enthielt, das Glühen vor der Heisspressung nahm man bei der Temperatur 650° vor, die β-Härtung des gepressten Rohrrohlings führte man ab der Temperatur 900°C mit der Geschwindigkeit 500°C/s und die nachfolgende Glühung bei der Temperatur 380°C durch.

### Beispiel 3

Das Verfahren führte man ähnlich dem Beispiel 2 durch. Der Unterschied bestand darin, dass das Material in Masse-% 1,0 Niob, 0,3 Eisen, 0,04 Kohlenstoff, 0,007 Silizium enthielt, das Glühen vor der Heisspressung nahm man bei der Temperatur 520°C vor, die β-Härtung des gepressten Rohrrohlings führte man ab der Temperatur 1100°C mit der Geschwindigkeit 1000°C/s und die nachfolgende Glühung bei der Temperatur 520°C durch.

### Beispiel 4

Das Verfahren führte man ähnlich dem Beispiel 3 durch. Der Unterschied bestand darin, dass das Material in Masse-% 1,5 Zinn, 0,15 Chrom, 0,006 Kohlenstoff enthielt. Das Glühen vor der Heiss-Pressung nahm man bei der Temperatur 380°C vor, die β-Härtung führte man ab der Temperatur 1000°C mit der Geschwindigkeit 60°C/s und die nachfolgende Glühung bei der Temperatur 450°C durch.

### Beispiel 5

Das Verfahren führte man ähnlich dem Beispiel 4 durch. Der Unterschied bestand darin, dass das Material in Masse-% 1,3 Zinn, 0,005 Chrom, 0,005 Silizium, 0,01 Sauerstoff enthielt, das Glühen vor der Heissoressung nahm man bei der Temperatur 620°C vor, die β-Härtung des gepressten Rohrrohlings führte man nicht durch und unterzog ihn dem Glühen bei der Temperatur 650°C.

### Beispiel 6

Das Verfahren führte man ähnlich dem Beispiel 4 durch. Der Unterschied bestand darin, dass das Material in Masse-% 1,2 Zinn, 0,4 Eisen, 0,008 Chrom, 0,005 Kohlenstoff, 0,05 Sauerstoff, 0,15 Silizium enthielt, wobei man vor der Heisspressung kein Glühen vornahm.

### Beispiel 7

Das Verfahren führte man ähnlich dem Beispiel 6 durch. Der Unterschied bestand darin, dass das Material 0,05-Masse-% Silizium enthielt, die β-Härtung des gepressten Rohrrohlings nahm man nicht vor, während das Glühen bei der Temperatur 520°C erfolgte.

### Beispiel 8

Das Verfahren führte man ähnlich dem Beispiel 7 durch. Der Unterschied bestand darin, dass das Material in Masse-% 0,5 Niob, 1,0 Zinn, 0,3 Eisen, 0,2 Chrom, 0,01 Kohlenstoff, 0,15 Sauerstoff enthielt, während man das Glühen des gepressten Rohlings bei der Temperatur 380°C vornahm.

Der Gehalt an Komponenten und die Bedingungen der Arbeitsoperationen des erfindungsgemässen Verfahrens sind für alle Beispiele in Tabelle 1 angeführt. Die Charakteristiken der Struktur und der Eigenschaften von Halberzeugnissen und Fertigrohren sind in Tabelle 2 angeführt. Den Bruchwiderstand beurteilte man nach den Werten der Kerbschlagzähigkeit des Materials vor dem ersten Kaltwalzen und nach dem Vorhandensein von Mikrorissen nach dem ersten Kaltwalzen, was auch die Reserve der technologischen Plastizität des Materials kennzeichnet.

Die Mikrostruktur des Materials von Fertiterzeugnissen wurde durch die Grösse der Hauptmasse der Teilchen der zweiten Phase (der intermetallischen Verbindungen), durch den mittleren Teilchenabstand und den Anteil der Teilchen Zr(Nb,Fe)₂, Zr(Nb,Cr,Fe), (Zr,Nb)₃Fe im Gesamtvolumen der eisenhaltigen Teilchen der zweiten Phase charakterisiert. Die Eigenschaften von Fertigrohren wurden durch die Werte der Plastizität (Dehnung) bei der Zugprüfung von Probestücken in Längsrichtung, nach der Massezunahme von Probestücken im Wasser eines Autoklavs bei der Temperatur 400°C während 72 Stunden und bei der Temperatur 350°C während 3000 Stunden, nach der Kriechgeschwindigkeit während 3000 Stunden der Prüfungen bei der Temperatur 350°C und Belastung 100 MPa und nach der Strahlungswachstums-Verformung bei der Bestrahlung von Probestücken bis zur Fluenz 5,4·10²⁶ m⁻² (E > 0,1 µeV) charakterisiert.

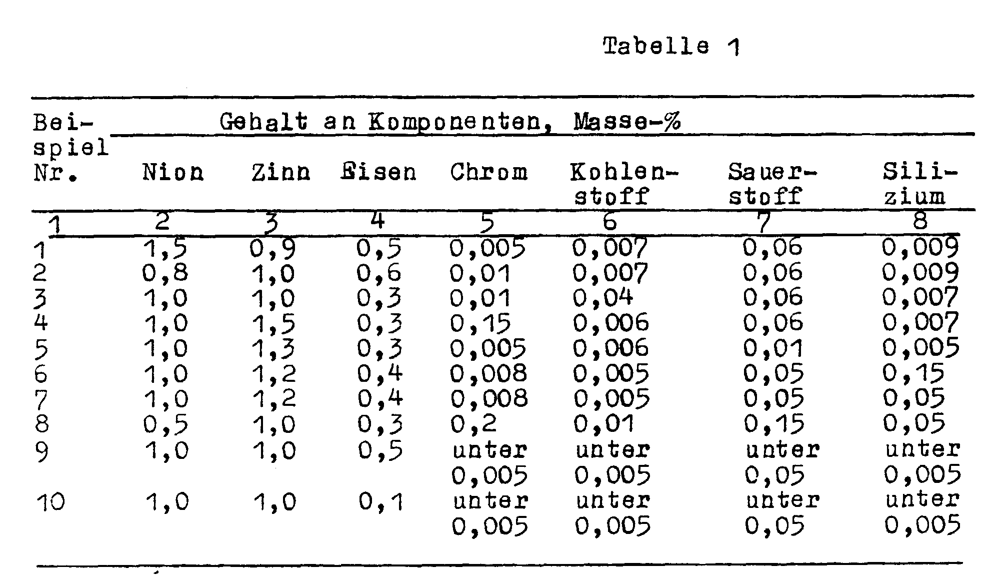

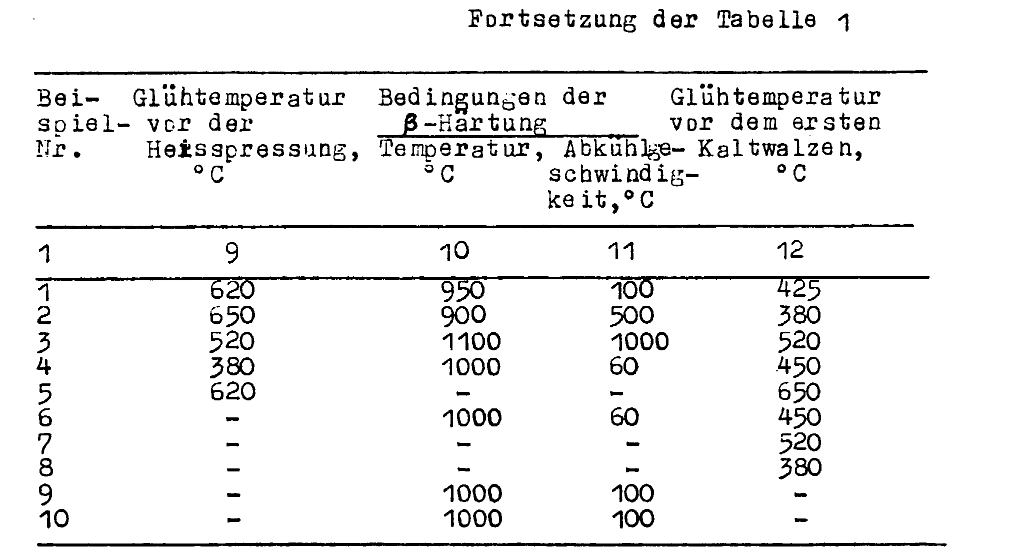

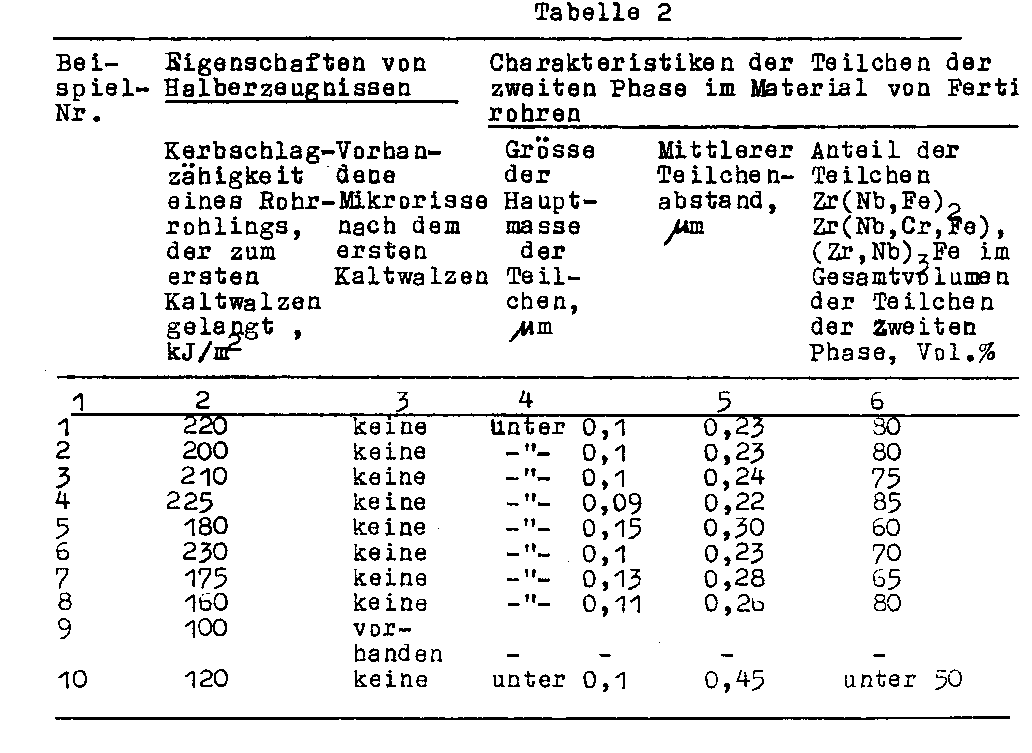

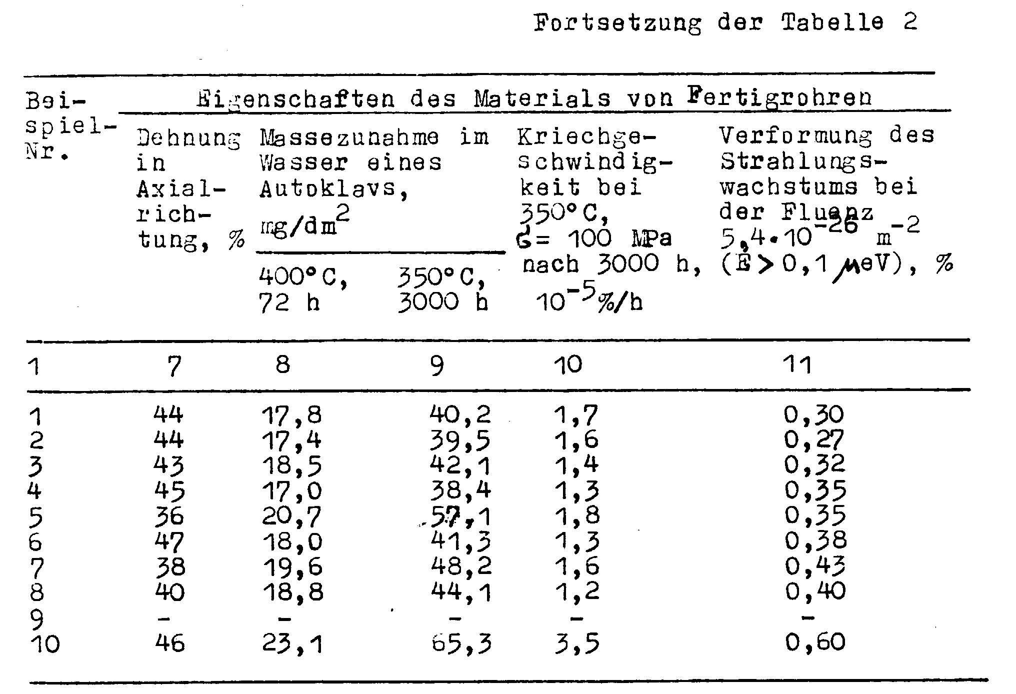

Wie aus den angeführten Beispielen ersichtlich ist, gewährleistet die Anwendung des erfindungsgemässen Materials und des Verfahrens zur Herstellung von Erzeugnissen aus ihm die Ausbildung im Erzeugnismaterial einer homogenen Struktur mit feindisperser und gleichmässiger Verteilung der Teilchen der zweiten Phase, wobei über 60 Vol. % derselben Teilchen der intermetallischen Verbindungen Zr(Nb,Fe)₂, Zr(Nb,Cr,Fe), (Zr,Nb)₃Fe sind. Als Ergebnis der Ausbildung einer solchen Mikrostruktur besitzt das Material des Erzeugnisses einen hohen Bruchwiderstand, eine erhöhte Plastizität und einen erhöhten Korrosionswiderstand, eine hohe Beständigkeit gegen Strahlungswachstum und eine niedrige Kriechgeschwindigkeit.

Zum Vergleich ist in den Beispielen 9 und 10 (der Tabellen 1 und 2) ein Verfahren zur Herstellung von Rohren angeführt, das nach einer bekannten Technologie durchgeführt worden ist (US, A, Nr. 4649023 - Prototyp), wobei im Beispiel 9 ein Material mit hohem Eisengehalt und im Beispiel 10 ein Material mit niedrigem Eisengehalt dieser Behandlung unterworfen wurde.

Das Fehlen einer Glühung vor dem ersten Kaltwalzen der Legierung mit erhöhtem Eisengehalt (Beispiel 9) führt zur Bildung von Mikrorissen, weshalb alle hergestellten Erzeugnisse bei der defektoskopischen Kontrolle zu Ausschuss erklärt wurden. Die Charakteristiken der Teilchen der zweiten Phase, die Korrosionsbeständigkeit, die Kriechgeschwindigkeit und die Strahlungswachstums-Verformung sind im Beispiel 10 zusehends schlechter als in dem vorgeschlagenen, nach dem Verfahren gemäss der Erfindung bearbeiteten Material.

### Gewerbliche Verwertbarkeit

Am effektivsten kann die vorliegende Erfindung zur Herstellung von Erzeugnissen angewendet werden, die in der aktiven Zone von Kernreaktoren zum Einsatz gelangen. Ausserdem kann das angegebene Material in der chemischen Industrie, in der medizinischen Industrie und auf anderen Gebieten der Technik verwendet werden, wo hohe Korrosionsbeständigkeit, Plastizität, Bruchwiderstand, Zeitstandfestigkeit und hohe Strahlungsfestigkeit erforderderlich sind.

## Patentansprüche

1. Material auf Basis von Zirkonium, das Niob, Zinn, Eisen, Chrom, Kohlenstoff, Sauerstoff und Silizium enthält und eine Mikrostruktur aufweist , die Teilchen von zinn- und eisenhaltigen intermetallischen Verbindungen einschliesst, wobei es Komponenten im folgenden Verhältnis in Masse-% enthält:
| | |
|---|---|
| Niob | 0,5-1,5 |
| Zinn | 0,9-1,5 |
| Eisen | 0,3-0,6 |
| Chrom, | 0,005-0,2 |
| Kohlenstoff | 0,005-0,04 |
| Sauerstoff | 0,05-0,15 |
| Silizium | 0,005-0,15 |
| Zirkonium | alles übrige. |
wobei die Mikrostruktur des Materials Teilchen der eisenhaltigen intermetallischen Verbindungen vom Typ Zr(Nb,Fe)₂, Zr(Fe,Cr,Nb), (Zr,Nb)₃Fe einschliesst, deren Summe gleich oder grösser ist als 60 Vol.% des Gesamtgehaltes an eisenhaltigen intermetallischen Verbindungen bei einem Abstand zwischen den Teilchen von 0,20 bis 0,40 µm.

2. In der aktiven Zone von Kernreaktoren einsetzbares Erzeugnis aus einem Material nach Anspruch 1.

3. Verfahren zur Herstellung von in der aktiven Zone von Kernreaktoren einsetzbaren Erzeugnissen nach Anspruch 2, welches Verfahren die Herstellung eines Blocks, die Beta-Vorbearbeitung des Blocks, die Erzeugung eines Rohlings durch Heissformung des Blocks bei der Existenztemperatur von Alpha-Zirkonium, die Kaltformung des Rohlings mit Zwischenglühungen bei der Existenztemperatur von Alpha-Zirkonium und die Fertigbearbeitung des Rohlings bis zum fertigen Erzeugnis einschliesst, dadurch wobei man nach der Heissformung des Blocks bei der Existenztemperatur von Alpha-Zirkonium den Rohling bei einer Temperatur von 380°C bis 650°C glüht.

4. Verfahren nach Anspruch 3, dadurch **gekennzeichnet,** dass man nach der Beta-Bearbeitung vor der Heissformung des Blocks den Rohling bei einer Temperatur von 380°C bis 650°C glüht.

5. Verfahren nach Anspruch 3 oder 4, dadurch **gekennzeichnet,** dass man vor dem Glühen nach der Heisformung den Rohling der Hartung ab einer Temperatur von 900°C bis 1100°C unterwirft, wobei man das genannte Glühen bei einer Temperatur von 380°C bis 520°C durchführt.

6. Verfahren nach Anspruch 5, dadurch **gekennzeichnet,** dass man die Härtung mit einer Geschwindigkeit von 60°C/s bis 1000°C/s durchführt.

## Claims

1. A zirconium-based material, containing niobium, tin, iron, chromium, carbon, oxygen, and silicon and having a microstructure, comprising particles of stanniferous and ferriferous intermetallides, said materials containing said components in the following ratio (on a weight percent basis):
| | |
|---|---|
| Nb | 0.5 - 1.5 |
| Sn | 0.9 - 1.5 |
| Fe | 0.3 - 0.6 |
| Cr | 0.005 - 0.2 |
| C | 0.005 - 0.04 |
| O | 0.05 - 0.15 |
| Si | 0.005 - 0.15 |
| Zr being the remainder, | |
the microstructure of the material comprising the particles of the ferriferous intermetallides of the type of Zr(Fe,Nb)₂, Zr(Fe,Cr,Nb), and (Zr, Nb)₃Fe, the sum of said intermetallides being equal to or exceeding 60 wt.% of a total content of the ferriferous intermetallides, the interparticle distance being from 0.20 to 0.40 micron.

2. A product made of the material claimed in claim 1 and used in the active core of nuclear reactors.

3. A method for making products used in the active core of nuclear reactors, comprising producing an ingot, preliminary beta-treatment of said ingot, making a billet by hot forming of the ingot at a temperature of existence of alpha-zirconium, cold billet forming involving intermediate annealing procedures at a temperature of existence of alpha-zirconium, and bringing the billet to a finished product, wherein formation of hot ingot at a temperature of existence of alpha-zirconium is followed by billet annealing at 380 - 650°C.

4. A method according to Claim 3, wherein the billet, after having been passed the beta-treatment before hot forming of an ingot, is annealed at 380 - 650°C.

5. A method according to claim 3 or claim 4, wherein the billet, after having been subjected to hot forming and preparatory to annealing, is subjected to hardening at a temperature from 900 to 1100°C, and said alpha-annealing procedure is carried out at 380 to 520°C.

6. A method according to claim 5, wherein hardening is carried out at a rate of from 60°C/s to 1000°C/s.

## Revendications

1. Matériau à base de zirconium, qui contient du niobium, de l'étain, du fer, du chrome, du carbone, de l'oxygène et du silicium et présente une microstructure qui renferme des particules de composés intermétalliques contenant de l'étain et du fer, le matériau contenant les composants dans les proportions suivantes, en pourcentages massiques :
| | |
|---|---|
| niobium | 0,5 - 1,5 |
| étain | 0,9 - 1,5 |
| fer | 0,3 - 0,6 |
| chrome | 0,005 - 0,2 |
| carbone | 0,005 - 0,04 |
| oxygène | 0,05 - 0,15 |
| silicium | 0,005 - 0,15 |
| zirconium le reste, | |
la microstructure du matériau renfermant des particules de composés intermétalliques contenant du fer du type Zr(Nd,Fe)₂, Zr(Fe,Cr,Nb), (Zr,Nb)₃Fe, dont la somme est supérieure ou égale à 60 % en volume de la teneur totale en composés intermétalliques contenant du fer, avec une distance entre particules de 0,20 à 0,40 µm.

2. Produit utilisable dans la zone active de réacteurs nucléaires, composé d'un matériau selon la Revendication 1.

3. Procédé de fabrication de produits utilisables dans la zone active de réacteurs nucléaires selon la Revendication 2, lequel procédé comprend la fabrication d'un bloc, le pré-traitement bêta d'un bloc, la production d'une ébauche par formage à chaud du bloc à la température d'existence du zirconium alpha, le formage à froid de l'ébauche avec des recuits intermédiaires à la température d'existence du zirconium alpha et la finition de l'ébauche jusqu'au produit fini, l'ébauche étant recuite à une température de 380°C à 650°C après le formage à chaud du bloc à la température d'existence du zirconium alpha.

4. Procédé selon la Revendication 3, ***caractérisé en ce qu*'**après le traitement bêta et avant le formage à chaud du bloc, on recuit l'ébauche à une température de 380°C à 650°C.

5. Procédé selon la Revendication 3 ou 4, ***caractérisé en ce qu***'avant le recuit suivant le formage à chaud, on soumet l'ébauche à un durcissement depuis une température de 900°C à 1100°C, ledit recuit se faisant à une température de 380°C à 520°C.

6. Procédé selon la Revendication 5, ***caractérisé en ce que*** l'on effectue le durcissement à une vitesse de 60°C/s à 1000°C/s.
